# EUROPEAN PATENT SPECIFICATION

(11) **EP 2 444 028 B1**
(45) Date of publication and mention of the grant of the patent: **08.01.2014**
(21) Application number: 10188227.2
(22) Date of filing: 20.10.2010
(51) Int. Cl.: A61C 1/08, A61C 9/00

(54) **A method of providing a patient-specific dental fixture-mating arrangement**
Verfahren zur Bereitstellung einer patientenspezifischen Zahnimplantatfixieranordnung
Procédé de fourniture d'un agencement d'adaptation d'appareil dentaire spécifique au patient

(43) Date of publication of application: 25.04.2012
(73) Proprietor: Dentsply IH AB, 431 21 Mölndal (SE)
(72) Inventor: Holmström, Johan, SE-428 37, KÅLLERED (SE); Wendel, Mats, SE-435 42, MÖLNLYCKE (SE); Dahlström, Mattias, SE-427 34, BILLDAL (SE)
(74) Representative: Somlo, Tommy

(56) References cited:
- WO-A1-2009/149881
- US-A1- 2005 287 492
- US-A1- 2009 042 167
- US-A1- 2009 162 813
- US-A1- 2010 119 993
- US-B1- 6 227 859
- US-B1- 6 788 986

## Description

### Technical field

The present invention relates to a method of providing a patient-specific dental fixture-mating arrangement which is to be received by a dental fixture installed in a maxilla or mandible. A dental fixture-mating arrangement may, for instance, be a dental abutment, an prosthesis, a final dental restoration, a dental healing component, etc.

### Background art

Dental implant systems are widely used for replacing damaged or lost natural teeth. In such systems, a dental fixture is placed in the jawbone of a patient in order to replace the natural tooth root. An abutment structure comprising one or several parts may then be attached to the fixture in order to build up a core for the part of the prosthetic tooth protruding from the bone tissue, through the soft gingival tissue and into the mouth of the patient. On said abutment, the prosthesis or crown may finally be seated. Examples of this are provided by WO 2009/149 881 and US 2010/0119993 amongst others.

The final prosthesis should be sized and configured so as to naturally fit with the remaining teeth of the patient, both for functionality and aesthetics. To this end a dental technician may try out a proper prosthesis for the individual patient, using a model of the jaw of the patient, said model including the fixture. The dental technician may also modify a pre-fabricated abutment to match the contour of the soft gingival tissue.

Thus, when making the abutment and the prosthetic tooth, the dental technician has taken into account the surrounding tissue and adjacent teeth. The dentist receives the abutment and prosthetic tooth either as one integral unit or as separate parts to be assembled in the oral cavity of the patient. Often, the dentist who receives the abutment and the prosthetic tooth will understand how the abutment should be rotationally oriented relative to the fixture in order to obtain the alignment as intended by the dental technician. Nevertheless, it may sometimes be difficult for the dentist to see which is the correct orientation and, of course, there may be a risk of the dentist simply overlooking or ignoring the correct rotational orientation of the abutment relative to the fixture.

It is an object of the invention to mitigate the risk of a dentist connecting a dental abutment to a dental fixture with another rotational orientation than what was intended by the dental technician.

It is also an object of the invention to mitigate the risk of a dentist positioning a prosthesis (prosthetic tooth) with a rotational orientation other than what is intended by the dental technician.

These and other objects, which will become apparent in the following, are achieved by the method as defined in the accompanied claims.

### Summary of the Invention

The present invention is based on the insight that by only having a single rotational orientation available for a dental fixture-mating arrangement (such as an abutment, prosthesis, healing component etc.) when connected to a fixture, the dentist is prevented from inadvertently placing the fixture-mating arrangement in a different rotational orientation than what the dental technician had intended.

According to the invention, there is provided a method of providing a patient-specific dental fixture-mating arrangement, the method comprising:
- determining, for an implantation site at the maxilla or mandible in which a dental fixture having first indexing means has been or will be inserted, an inclination of the fixture relative to the jawbone and the rotational orientation of said first indexing means relative to the jawbone,
- determining, based on the determined inclination of the fixture and rotational orientation of said first indexing means, a shape of a first portion of a dental fixture-mating arrangement and the rotational orientation of said first portion relative to the fixture,
- providing a dental fixture-mating arrangement which comprises
   a fixture engaging second portion having second indexing means which can only mate with said first indexing means in one rotational position of the second portion relative to the fixture, and
   a first portion having said determined shape and being
   in such a rotational position relative to said second indexing means so that said determined rotational orientation of the first portion is obtained when the fixture engaging second portion of the dental fixture-mating arrangement is connected to the dental fixture.

Thus, by providing a fixture-mating arrangement with a fixture engaging portion which can only be connected to the dental fixture in one rotational direction and by having information about the inclination and rotational position of the fixture in the oral cavity, the first portion of fixture-mating arrangement may be custom-made by a dental technician (or whoever provides the fixture-mating arrangement) without risking that the dentist will subsequently connect it incorrectly to the fixture implanted in the patient.

In addition to receiving information about the inclination and the rotational position of the fixture, according to at least one example embodiment, the height/depth of the first indexing means relative to the jawbone is also determined. Additionally, the buccolingual and/or mesiodistal position of the fixture relative to the jawbone and any adjacent teeth may be determined.

The step of determining the shape and orientation of said first portion of the fixture-mating arrangement does not necessarily have to be carried out before the actual step of providing the fixture-mating arrangement. It can in fact be made substantially simultaneously, e.g. if a blank is inserted into a model of the jaw and the blank is machined to a shape which goes well with the surrounding teeth and gingiva.

The determination of the inclination of the fixture and rotational orientation of said first indexing means (and optionally the above-mentioned height/depth and/or buccolingual and/or mesiodistal positions of the fixture) may be achieved by means of an acquired intra-oral impression of the implantation site. Therefore, in accordance with at least one example embodiment, the method comprises: receiving an intra oral impression of an implantation site at the maxilla or mandible in which a dental fixture having first indexing means has been inserted, wherein an inclination of the fixture relative to the jawbone and the rotational orientation of said first indexing means relative to the jawbone are derivable from said impression.

Said impression may either be a physical impression, i.e. impression material is applied to the implantation site and the surrounding teeth, and then the impression material is let to harden so as to mimic the shape of the teeth. However, said impression may, alternatively, be a digital (optical) impression provided by means of an electronic scanning apparatus. In the letter case, a set of data would provide a representation of the implantation site and adjacent teeth. Said set of data may be viewable as an image on a user interface, such as a screen associated with a computer. Examples of electronic scanning apparatuses that may be used are various types of 3D scanners. For instance, a contact 3D scanner may probe the implantation site through physical touch. A CCM (Coordinate Measuring Machine) is an example of a contact 3D scanner. Alternatively, a non-contact active scanner may be used, such as a laser scanner or a light scanner. A further alternative is non-contact passive scanning, such as a stereoscopic system which may include two video cameras slightly apart. Yet another alternative is CT-scanning (Computed Tomography).

An alternative to acquiring an impression of an implantation site for determining the inclination of the inserted fixture and the rotational orientation of said first indexing means, is to determine such inclination and rotational orientaion before inserting the fixture into the jawbone. For instance, the direction of the bore hole in the jawbone into which the fixture is to be inserted may be planned in advance, and suitably, also the depth of the bore hole. It is also possible to plan in advance in which orientation the first indexing means of the fixture should be arranged when the fixture is implanted. For instance, if a driver having second indexing means which can only mate with the first indexing means of the fixture in one rotational position, the rotational orientation of first indexing means may be derived via, for instance, a distinctive marking on the driver. Thus, when the fixture is driven into the bore hole, which has been prepared with the planned inclination, the dentist can, when installing the fixture in the bore hole, decide by looking at the distinctive marking on the driver when the first indexing means is in the planned rotational position. Because both the inclination of the fixture and the rotational orientation of the first indexing means can be planned in advance, it is effectively possible to provide the dentist with the fixture and the fixture-mating arrangement (e.g. abutment, final restoration, etc) in one go.

Thus, according to at least one example embodiment of the invention, the step of determining the inclination of the fixture comprises determining a desired inclination of a bore hole in the jawbone for receiving the fixture, and the step of determining the rotational orientation of the first indexing means comprises determining a desired rotational orientation of the first indexing means of a fixture inserted into said bore hole.

Irrespective of whether the step of determining the inclination of the fixture and rotational orientation of said first indexing means is pre-planned before installation of the fixture, or based on a received impression which is either a physical impression or a digital impression, the inducible information may be used for providing a model of the implantation site.

Thus, according to at least one example embodiment of the invention, the method comprises providing a model of the implantation site with adjacent teeth in the jaw based on said determined inclination of the fixture and rotational orientation of said first indexing means, the model comprising a fixture replica having the corresponding inclination and orientation of first indexing means relative to the model as the fixture has or will have relative to the jawbone. The model may be a physical model, such as made from plastic, plaster, etc. The fixture replica could be a separate part which is installed into the rest of the model. Alternatively, the fixture replica could be made from the same material as the rest of the model, e.g. if the model is formed by sintering or machining based on a data file. As another option, rather than having a physical model, the model may be digital. A digital model may be obtained by first scanning the oral cavity in order to capture a digital impression, and then inputting the data representing the digital impression into a CAD program. The fixture replica in the digital model will thus be a virtual fixture, or at least a part of a virtual fixture comprising said first indexing means.

According to at least one example embodiment, said steps of determining the shape and rotational orientation of a first portion and said step of providing the first portion with the determined shape and rotational orientation are performed with a fixture-mating arrangement or a blank for a fixture-mating arrangement having said second indexing means and being connected to the fixture replica. Thus, a fixture-mating arrangement or a blank may be installed in a traditional physical model including a fixture replica. The dental technician may then shape said first portion of the fixture-mating arrangement as he/she considers appropriate.

Rather than manually shaping the fixture-mating arrangement, an alternative would be to determine the shape with e.g. a CAD program. Thus, according to at least one example embodiment, the formed model is scanned, and the scanned model is transformed into a three dimensional digital image, wherein said step of determining a shape and rotational orientation of a first portion is performed based on the three dimensional image. The three dimensional image does not only allow the fixture-mating arrangement such as an abutment to be designed from a computer, but also the final tooth shape may be designed in such manner. Thus, when the tooth shape has been decided, the abutment may be designed, and then the abutment may be produced in accordance with the design. As an alternative to scanning the model, it would be conceivable to scan the actual physical impression and from that create a digital model and determine the shape of the abutment.

As an alternative to scanning a physical model, it would be conceivable to create a virtual model, e.g. a three-dimensional CAD model based on data input representing a digital impression. Thus, according to at least one example embodiment, said step of determining the inclination of the fixture and rotational orientation of said first indexing means is based on a digital impression obtained by intra-oral scanning, wherein said step of determining the shape and rotational orientation of a first portion is performed on a computer as a three-dimensional CAD model.

According to at least one example embodiment, said steps of providing a dental fixture-mating arrangement and providing the first portion with said determined shape, comprise
- inputting data of the CAD (computer aided design) model into a CAM (computer aided manufacturing) software, and
- controlling a fixture-mating arrangement forming process with said CAM software, wherein the forming processes is selected from the group consisting of:
   a) additive manufacturing, such as fused deposition or laser sintering, and
   b) subtractive manufacturing, such as machining or milling a blank.

A fixture-mating arrangement may be precision-machined from a solid blank. The blank may have a pre-fabricated indexing means, or alternatively, the indexing means may be formed when processing the blank. A fixture-mating arrangement in the form of an abutment may be precision-machined from a solid blank of e.g. medical grade titanium alloy or ziriconia.

According to at least one example embodiment, said second indexing means is provided as an irregular shape of the fixture engaging second portion so that said second indexing means can only mate in a single rotational orientation with said first indexing means which is provided as a matching irregular shape. According to at least another example embodiment, said second indexing means is provided as one or more recesses or protrusions at said second portion of the fixture-mating arrangement so that said second indexing means can only mate in a single rotational orientation with said first indexing means which is provided as one or more matching receiving protrusions or recesses, respectively.

As mentioned previously, the dental fixture-mating arrangement may, for example, be a dental abutment, a dental prosthesis, a final dental restoration or a dental healing component. Alternatively, it may be a combination of two or more of said examples, or a combination of at least one of said examples together with some other product.

Thus, according to at least one example embodiment, the fixture-mating arrangement is a dental abutment, then said first portion may suitably be a prosthesis-receiving portion of the dental abutment and said second portion may suitably be a fixture engagement portion of the dental abutment.

In at least one alternative example embodiment, the fixture-mating arrangement comprises a dental abutment, wherein said first portion may either be part of the abutment or part of another component, and wherein said second portion may be the fixture engagement portion of the dental abutment.

According to at least one example embodiment, the dental fixture-mating arrangement comprises a dental abutment and a prosthesis, wherein said first portion is the prosthesis and wherein said second portion is a fixture engagement portion of the dental abutment, the method comprising providing the prosthesis with said determined shape and in such a rotational orientation relative to said second indexing means so that, if the prosthesis is connected to a prosthesis-receiving portion of the abutment, said determined rotational orientation of the prosthesis is obtained when the fixture engagement portion of the dental abutment is connected to the dental fixture.

According to at least one example embodiment, said dental fixture-mating arrangement is a final dental restoration which comprises said first and second portions.

According to at least one example embodiment, said dental fixture-mating arrangement is a dental healing component for support the gingiva, wherein said first portion is a gingiva-supporting portion of the dental healing component and wherein said second portion is a fixture engagement portion of the dental healing component.

According to a second aspect, there is provided a method of providing a patient-specific dental abutment. The method comprises
- determining, for an implantation site at the maxilla or mandible in which a dental fixture having first indexing means has been inserted or will be inserted, an inclination of the fixture relative to the jawbone and the rotational orientation of said first indexing means relative to the jawbone (and optionally the height/depth and/or buccolingual and/or mesiodistal positions of the fixture),
- determining, based on the determined inclination of the fixture and rotational orientation of said first indexing means, a shape of a prosthesis-receiving portion of a dental abutment and the rotational orientation of the prosthesis-receiving portion relative to the fixture,
- providing a dental abutment which comprises
   a fixture engagement portion having second indexing means which can only mate with said first indexing means in one rotational position of the fixture engagement portion relative to the fixture, and
   a prosthesis-receiving portion having said determined shape and being in such a rotational position relative to said second indexing means so that said determined rotational orientation of the prosthesis-receiving portion is obtained when the fixture engagement portion of the dental abutment is connected to the dental fixture.

Thus, by providing an abutment with a fixture engagement portion which can only be connected to the dental fixture in one rotational direction and by having information about the inclination and rotational position of the fixture in the oral cavity, the prosthesis-receiving portion of the abutment may be custom-made by a dental technician (or whoever provides the abutment) without risking that the dentist will subsequently connect it incorrectly to the fixture implanted in the patient.

The step of determining the shape and orientation of the prosthesis-receiving portion of the abutment does not necessarily have to be carried out before the step of providing the abutment. It can in fact be made substantially simultaneously, e.g. if an abutment blank is inserted into a model of the jaw and the abutment is machined to a shape which goes well with the surrounding teeth and gingiva.

According to at least one example embodiment, said steps of determining the shape and rotational orientation of a prosthesis-receiving portion and said step of providing the prosthesis-receiving portion with the determined shape and rotational orientation are performed with an abutment or abutment blank having said second indexing means and being connected to the fixture replica. Thus, an abutment or abutment blank may be installed in a traditional physical model including a fixture replica. The dental technician may then shape the prosthesis-receiving portion of the abutment as he/she considers appropriate. For instance, some material may be cut away in order to provide an inclination or a height of the prosthesis-receiving portion that would form a suitable core for a prosthetic tooth and would make the prosthetic tooth fit aesthetically with the surrounding teeth.

As is readily understood, the method according to the second aspect, may comprise any one of the features, steps and example embodiments discussed herein in relation to the invention.

According to a third aspect, there is provided a method of providing a patient-specific dental prosthesis, the method comprising:
- determining, for an implantation site at the maxilla or mandible in which a dental fixture having first indexing means has been inserted or will be inserted, an inclination of the fixture relative to the jawbone and the rotational orientation of said first indexing means relative to the jawbone (and optionally the height/depth and/or buccolingual and/or mesiodistal positions of the fixture),
- determining, based on the determined inclination of the fixture and rotational orientation of said first indexing means, a shape of a dental prosthesis and the rotational orientation of the prosthesis relative to the fixture,

- providing a dental abutment which comprises a prosthesis-receiving portion and a fixture engagement portion having second indexing means which can only mate with said first indexing means in one rotational position of the fixture engagement portion relative to the fixture, and
- providing the prosthesis with said determined shape and in such a rotational orientation relative to said second indexing means so that, if the prosthesis is connected to the prosthesis-receiving portion of the abutment, said determined rotational orientation of the prosthesis is obtained when the fixture engagement portion of the dental abutment is connected to the dental fixture.

Thus, the method according to the third aspect does not require a modification or determination of the shape of the abutment on which the prosthesis is to be located. Rather this aspect focuses on the shape and orientation of the prosthesis. By having a determined orientation of the prosthesis relative to the second indexing means of the abutment, and by having the second indexing means of the abutment only matable in one rotational orientation with the first indexing means of the fixture, incorrect placement of the prosthesis in the oral cavity may be avoided. Although the third aspect does not require a modification of the abutment, any abutment-shaping may be optional. Thus, the method according to the third aspect , may comprise any one of the features, steps and example embodiments discussed herein in relation to the invention and in relation to the second aspect.

According to a fourth aspect, there is provided a method of providing a patient-specific final dental restoration, the method comprising:
- determining, for an implantation site at the maxilla or mandible in which a dental fixture having first indexing means has been inserted or will be inserted, an inclination of the fixture relative to the jawbone and the rotational orientation of said first indexing means relative to the jawbone (and optionally the height/depth and/or buccolingual and/or mesiodistal positions of the fixture),
- determining, based on the determined inclination of the fixture and rotational orientation of said first indexing means, a shape of a final dental restoration and the rotational orientation of the final dental restoration relative to the fixture,
- providing a final dental restoration which comprises a fixture engagement portion having second indexing means which can only mate with said first indexing means in one rotational position of the fixture engagement portion relative to the fixture, and
- providing the final dental restoration with said determined shape in such a rotational orientation relative to said second indexing means so that, if the final dental restoration is connected to the fixture, said determined rotational orientation of the final dental restoration is obtained when the fixture engagement portion of the final dental restoration is connected to the fixture.

Thus, the method according to the fourth aspect does not require an abutment for receiving the final dental restoration. Rather, the final dental restoration can be attached directly to the fixture, without an intermediate abutment. However, it should be noted that a final dental restoration may comprise an abutment part on which restorative material has been built-up either directly or via an intermediate coping, thereby forming an integral component which can be connected to the fixture. Alternatively, the final dental restoration does not comprise an abutment part, but only a bulk of restorative material, possibly arranged on a coping. The fixture may be of a transgingival type, i.e. intended to extend above the jawbone and through the gingival, or subgingival, or even subcrestal, i.e. intended to be arranged completely below the bone level. The final dental restoration may either be connected externally on the fixture or internally of the fixture, e.g. in a socket of the fixture.

The method according to the fourth aspect, may comprise any one of the features, steps and example embodiments discussed herein in relation to previous aspects of the invention, as long as it is compatible with the fourth aspect. For instance, digital oral scanning may be used and the determination of the shape and rotational orientation of the final restoration may be performed on a computer as a three-dimensional CAD-model.

According to a fifth aspect, there is provided a dental implant arrangement, comprising
- a dental fixture for insertion into a jawbone, the fixture having first indexing means, and
- a final dental restoration having second indexing means which can only mate with said first indexing means in one rotational position of the final restoration relative to the fixture. The final dental restoration may be formed and connected to the feature as discussed above in connection with the fourth aspect of the invention.

According to a sixth aspect of the invention, there is provided a method of providing a patient-specific dental healing component for supporting the gingiva, the method comprising:
- determining, for an implantation site at the maxilla or mandible in which a dental fixture having first indexing means has been inserted or will be inserted, an inclination of the fixture relative to the jawbone and the rotational orientation of said first indexing means relative to the jawbone (and optionally the height/depth and/or buccolingual and/or mesiodistal positions of the fixture),
- determining, based on the determined inclination of the fixture and rotational orientation of said first indexing means, a shape of a gingiva-supporting portion of a dental healing component and the rotational orientation of the gingiva-supporting portion relative to the fixture,
- providing a dental healing component which comprises
   a fixture engagement portion having second indexing means which can only mate with said first indexing means in one rotational position of the fixture engagement portion relative to the fixture, and
   a gingiva-supporting portion having said determined shape and being in such a rotational position relative to said second indexing means so that said determined rotational orientation of the gingiva-supporting portion is obtained when the fixture engagement portion of the dental healing component is connected to the dental fixture.

Thus, the method according to the sixth aspect takes into account the possibility of first shaping the gingiva during a healing face by means of a healing component against which the gingiva will abut, before connecting a "permanent" abutment or prosthesis to the fixture. The healing component may be in the form of a simple healing cap, or in the form of a healing abutment. Its gingiva-supporting (gingiva-shaping) portion is suitably chosen based on a desired shape of a healed gingiva.

The method according to the sixth aspect, may comprise any one of the features, steps and example embodiments discussed herein in relation to previous aspects of the invention, as long as it is compatible with the sixth aspect.

According to a seventh aspect, there is provided a method of providing a patient-specific dental abutment, the method comprising:
- inserting a dental fixture having first indexing means into a maxilla or mandible,
- determining, before, during or after said insertion of the dental fixture, an inclination of the fixture relative to the jawbone and the rotational orientation of said first indexing means relative to the jawbone (and optionally the height/depth and/or buccolingual and/or mesiodistal positions of the fixture),
- determining, based on the determined inclination of the fixture and rotational orientation of said first indexing means, a shape of a prosthesis-receiving portion of a dental abutment and the rotational orientation of the prosthesis-receiving portion relative to the fixture,
- providing a dental abutment which comprises
   a fixture engagement portion having second indexing means which can only mate with said first indexing means in one rotational position of the fixture engagement portion relative to the fixture, and
   a prosthesis-receiving portion having said determined shape and being in such a rotational position relative to said second indexing means so that said determined rotational orientation of the prosthesis-receiving portion is obtained when the fixture engagement portion of the dental abutment is connected to the dental fixture.

The method according to the seventh aspect, may comprise any one of the features, steps and example embodiments discussed herein in relation to the previous aspects of the invention as long as it is compatible with the seventh aspect.

It should be understood that in the present disclosure, a dental implant may comprise a dental fixture and a superstructure, such as an abutment.

A dental fixture is for use as the anchoring member of a dental prosthesis. To this end, the dental fixture is insertable into a pre-prepared bore hole in the bone tissue of a jawbone (maxilla or mandible) at a site where the dental prosthesis is required. The dental fixture is normally rotated into the bore hole.

For screw-type dental fixtures the bore hole may be provided with internal threads in advance or may be left un-tapped with the dental fixture provided with a self-tapping capacity, e.g. by the provision of one or more axially-extending cutting recesses, edges or notches, etc in the fixture thread. For instance, an apical end portion of the fixture may be provided with 2-4 cutting recesses, such as 3 cutting recesses. Other number of cutting recesses are readily conceivable.

A superstructure for connecting a prosthetic part to the fixture may comprise an abutment, spacer or other transmusosal component which engages to the dental fixture to bridge the gingiva overlying the maxilla or mandible. The prosthetic part, e.g. a crown, bridge or denture may be secured to the abutment. There are various other forms that the superstructure can take. For instance, the prosthetic part may be secured directly to the dental fixture. A dental implant may thus comprise an abutment connected to the dental fixture, or the dental fixture without an abutment.

The term "coronal" is here and throughout this application used to indicate a direction towards a head end or trailing end of the dental implant. For instance, in a situation where an abutment is connected to a dental fixture, the coronal direction of the abutment would be a direction towards the part of the abutment being directed away from the fixture. Conversely, the term "apical" indicates a direction towards an insertion end of the component. Thus, apical and coronal are opposite directions. Furthermore, the term "axial direction" or "axially' is used throughout this application to indicate a direction taken from the coronal end to the apical end, or vice versa. The term "radial direction" or "radially' indicates a direction perpendicular to the axial direction.

A blind bore or socket may extend apically into the fixture body from the coronal end to an end surface in-between the apical and coronal ends of the fixture body for a superstructure to be secured to the fixture. The socket may comprise an internally-threaded section for screw connection of the superstructure to the fixture. A section of the socket, such as the coronal section, may be tapered towards the apical end. The tapered section is suitably arranged coronally of the internally-threaded section.

A first indexing means may be provided on an internal wall in a fixture socket, wherein the engagement portion of a dental component is adapted to be received in said socket. Alternatively the first indexing means may be provided on an external wall of a head portion which is to be enclosed by a dental component connectible to the fixture. Although this internal/external distinction has been made between socket and head portion, it should be noted that a head portion does not necessarily have an outer wall for receiving the engagement portion of the dental component. On the contrary, a head portion may be provided with an internal socket. Thus, any exemplified embodiments discussing a socket may be in the form of a socket in a head portion of a dental fixture.

The fixture may be used in a one stage procedure or a two stage procedure. In a one stage procedure a healing or temporary abutment is connected to the fixture to form the gingival tissue, and after a healing period the healing or temporary abutment is replaced by a permanent abutment. For a two stage procedure the fixture is provided with a cover screw and the gingival tissue is sutured over the fixture and cover screw, and after a healing period the tissue is opened up and an abutment is connected to the fixture after removal of the cover screw.

The fixture may have a conically tapering end portion which tapers towards the coronal end. The axial extent of this coronal end portion is small compared to the total length of the fixture, as an example no more than 4 % of the total length, such as in the range of 1.5% -3.7%. The coronal end portion may suitably be provided without a threaded surface, e.g. having a smooth or a roughened (such as blasted) surface.

The fixture may have a substantially flat coronal end surface which is perpendicular to the longitudinal axis of the fixture. Alternatively, the coronal end surface may have a sloped contour relative to the longitudinal axis of the fixture, e.g. such that when positioned within the jawbone the length of the fixture is larger on a lingual side and shorter on a buccal side of the fixture. Another alternative is a saddle-shaped or wave-like coronal end surface.

The length of the dental fixture may be in the range of 5-19 mm, depending on the clinical situation. The outer diameter of the dental fixture may suitably be in the range of 2-6 mm, such as 3-5 mm.

The fixture may be substantially cylindrical or slightly tapering from the coronal end towards the apical end. If the fixture has a slight tapering, the core of the fixture and the outer periphery defined by e.g. thread tops may have the same or different angle of taper. Furthermore, the core of the fixture may be cylindrical while the thread tops describe a conicity or, conversely, the core of the fixture may be tapered while the thread tops describe a generally cylindrical geometry. Alternatively, the fixture may comprise a combination of one or more cylindrical and/or one or more tapering portions. Thus, one or more portions of the fixture may have e.g. thread tops lying in a common imaginary cylindrical surface, which cylindrical surface is parallel with the longitudinal axis of the fixture. Alternatively or additionally, one or more portions of the fixture may have thread tops lying in an imaginary conical surface which in the apical direction is tapering towards the longitudinal axis.

The externally threaded fixture may comprise one or more thread spirals.

The term "pitch" is used to indicate the axial distance between adjacent tops of a threading. The term "lead" is used to indicate the distance advanced parallel to the longitudinal axis when the fixture is turned one revolution, i.e. it corresponds to the pitch multiplied with the number of thread spirals. For a single thread spiral having a constant pitch, the lead is equal to the pitch; for a double thread spiral, the lead is twice the pitch.

The term "microthread" is used to indicate a thread having a height which is no greater than 0.2 mm. According to at least one example embodiment, the fixture is provided with microthreads having a height in the range of 0.02-0.2 mm, such as 0.05-.015 mm, for instance 0.1 mm. The term "macrothread" is used to indicate a thread having a height which is greater than 0.2 mm. According to at least one example embodiment, the fixture is provided with macrothreads having a height in the range of 0.25-0.35 mm, such as 0.3 mm.

Suitably, microthreads may be located coronally of macrothreads. For instance, microthreads may be arranged to engage dense cortical bone and macrothreads may be arranged to engage porous spongious/cancellous bone. The lead of a microthread suitably corresponds to the lead of a macrothread. The macrothread pitch may, as an example, be 2-4 times, such as 3 times, the pitch of the microthreads. The pitch (top-to-top spacing) at a fixture portion provided with microthreads may be around 0.20-0.24 mm. The pitch (top-to-top spacing) at a fixture portion provided with macrothreads may be around 0.60-0.72 mm.

Microthreads can be regarded as defined, oriented roughness. A non-oriented roughness having smaller dimensions, for instance obtained by blasting, etching, etc., may be superimposed on microthreads as well as on macrothreads.

A thread profile comprises two flanks, a top radius R, at the apex formed between the intersection of said two flanks, a bottom radius r formed between two adjacent threads, said flanks forming an angle v with a plane which is perpendicular to a cross section of said thread and perpendicular to a plane which is a tangent to the surface of the fixture body, said profile further having a height D. Suitably for 10º ≤ v < 35 º, R is greater than 0.4 x D and, for 35º ≤ v < 55 º, R is greater than 0.2 x D.

### Brief description of the drawings

Figs. 1a-1j illustrate at least one example of how to carry out at least one embodiment of the inventive method.
Figs. 2a-2c illustrate at least another example of how to carry out at least one embodiment of the inventive method.
Figs. 3-6 illustrate fixtures and abutment with different examples of conceivable indexing means.
Fig. 7 illustrates in accordance with at least one example embodiment of the invention a final dental restoration connectable to a dental fixture.

### Detailed description of the drawings

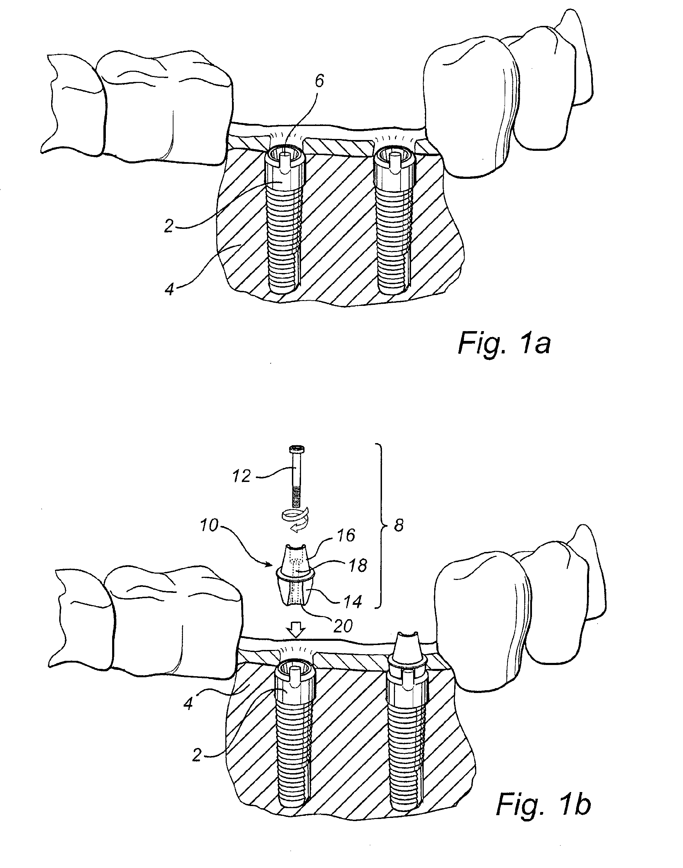

Figs. 1a-1j illustrate at least one example of how to carry out the inventive method.

In Fig. 1a, two dental fixtures are shown as implanted flush with bone tissue 4 at an implantation site (preparation site) between adjacent teeth. Each fixture 2 is provided with a first indexing means 6, herein illustrated as a longitudinally extending projection. However, it should be understood that said first indexing means 6 could be designed differently, for instance, as one or more radially extending recesses or protrusions inside the fixture socket. It should also be understood that although submerged fixtures having sockets are illustrated, other alternative fixtures are possible as well, for instance, transgingival fixtures having a head portion extending above the bone tissue 4.

In Fig. 1b, it is illustrated how an abutment 8 is attached into each of the fixtures. The abutment 8 comprises a body part 10 and a screw part 12. The body part 10 comprises a fixture engagement portion 14 and a prosthesis-receiving portion 16 which is intended to extend coronally of the fixture 2. A through hole 18 extends through the body part 10. The screw part 12 is adapted to be inserted into the through hole 18 and engage an internal thread (not shown) of the fixture 2 in order to secure the body part 10 to the fixture 2. The fixture engagement portion 14 is provided with second indexing means 20 which is adapted to mate with the first indexing 6 means of the fixture 2. Accordingly, in Fig. 1b, the second indexing means 20 is illustrated as a longitudinally extending groove in the surface of the fixture engagement portion 14. For other types of fixtures and first indexing means, the abutment and the second indexing means would be adapted as appropriate. It should be noted that although an abutment is illustrated in Fig. 1b, it should be understood that in this step other components, such as impression elements, having said second indexing means could be used.

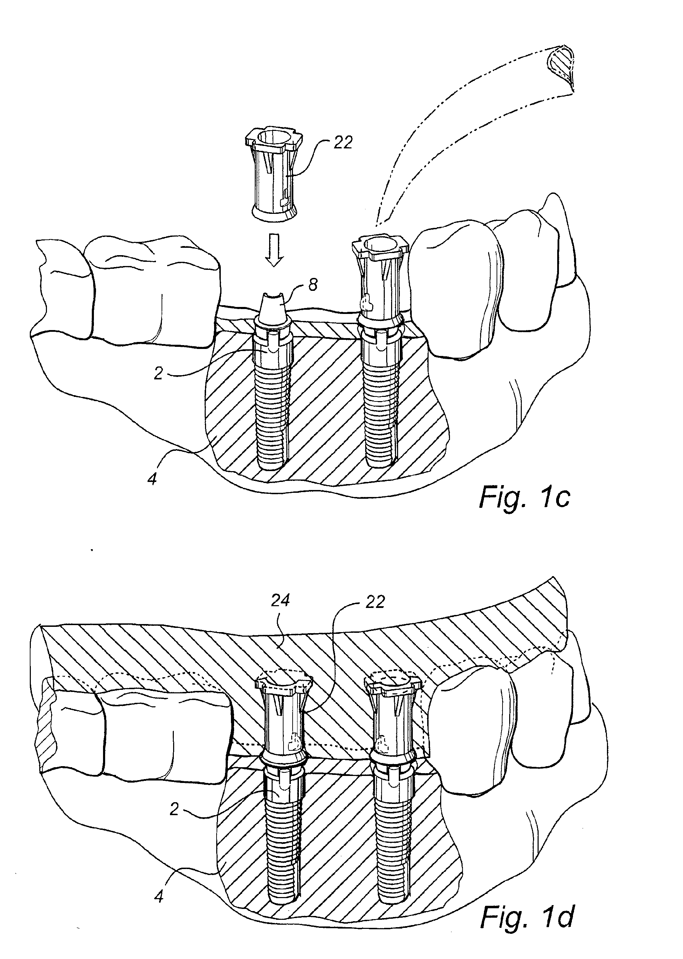

In Fig. 1c, it is illustrated how impression copings 22 are attached onto the abutments 8 using component engagement means of the abutments and abutment engagement means of the impression copings (for instance by means of snap fit engagement, not shown).

In Fig. 1d, impression material 24 has been applied, embedding the impression copings 22 in the impression material 24. The impression material 24 is let to harden so as to mimic the shape of the teeth adjacent the impression site and attach to the impression copings 22.

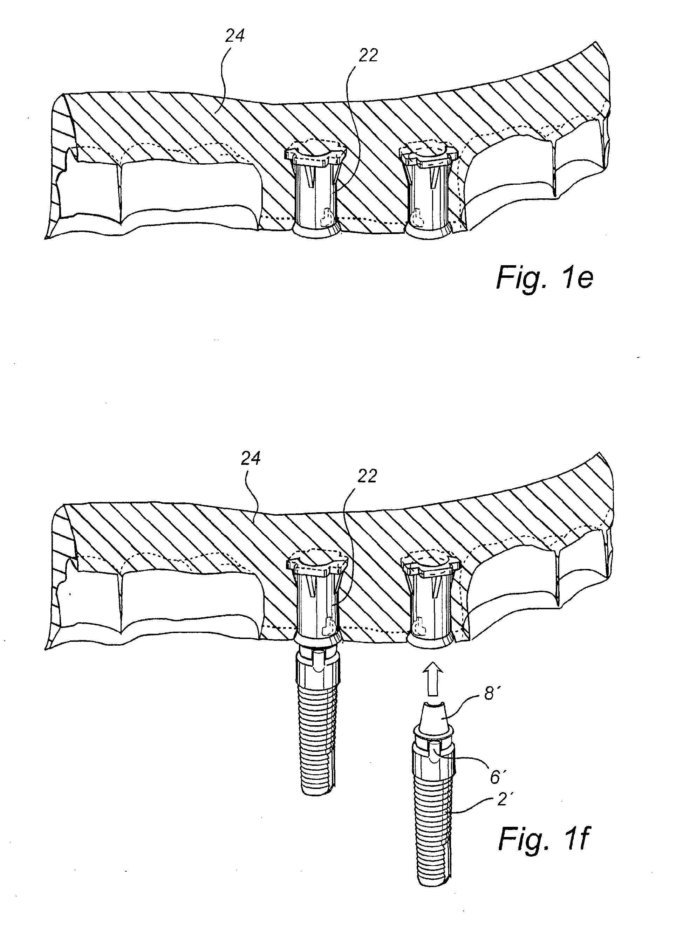

In Fig. 1e, the impression material 24 has been removed from the implantation site, bringing along the impression copings 22 embedded in the material 24.

In Fig. 1f depicts a dental implant assembly comprising an abutment 8' having second indexing means is connected to a fixture 2' having first indexing means 6'. The abutments 8' are introduced into the impression copings 22 attached in the impression material 24. Due to engagement means and rotational locking means on the abutments and impression copings, respectively, the abutments 8' are placed in the impression copings 22 in a position corresponding to the initial position of the abutments 8 in the impression copings 22. Although, Fig. 1f illustrates complete abutments 8' and fixtures 2' in the dental implant assembly, an alternative would be to have replicas. For instance, only the upper portion of the fixture could be used, whereas the lower portion with the external threads could be omitted or be provided without threads.

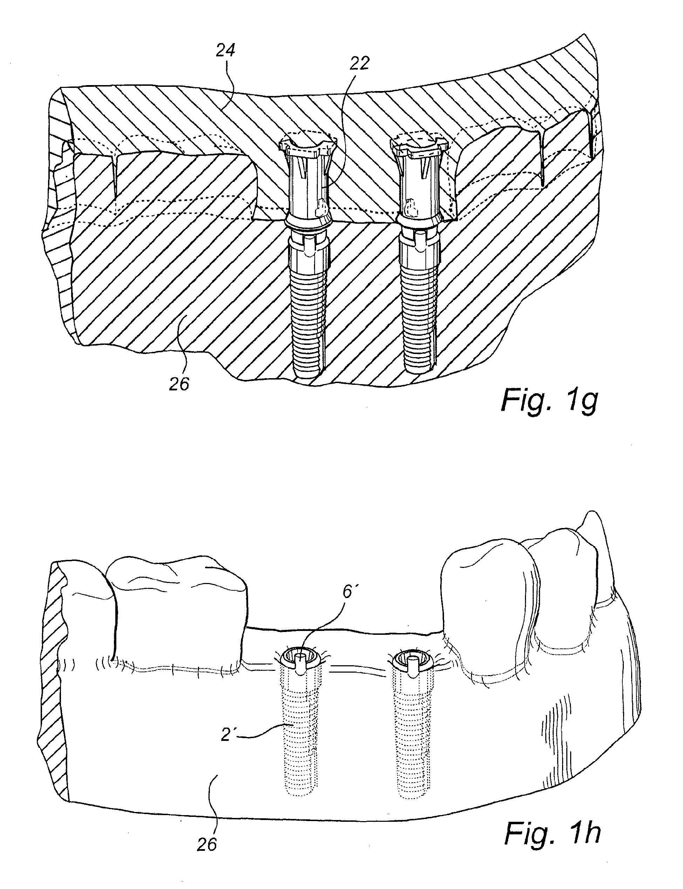

In Fig 1g, mould material 26 has been applied to the impression material 24.

In Fig 1h, the impression material and the impression copings have been removed, and also the abutments having been removed from the fixtures 2'. The moulding material 26 with the embedded fixtures 2' now forms a model of the implantation site with the adjacent teeth. The embedded fixtures 2' correspond to the fixtures 2 at the actual implantation site and has the same inclination and the same orientation of the first indexing means 6'.

A dental technician may now decide an appropriate shape of the prosthesis-receiving portion of an abutment, i.e. the first part of the fixture-mating arrangement. Thus, an abutment 8" having a second indexing means which mates with the first indexing means 6' of the fixture 2' is connected to the fixture 2', and then the prosthesis-receiving portion 16 "of the abutment 8" is appropriately shaped, e.g. by cutting or milling. The re-shaped prosthesis-receiving portion 16" will have a certain orientation relative to the fixture 2' in the mould 26, and because of the matching single-position indexing means, the prosthesis-receiving portion 16" will obtain the same orientation in the oral cavity when the abutment 8" is connected to the implanted fixture 2.

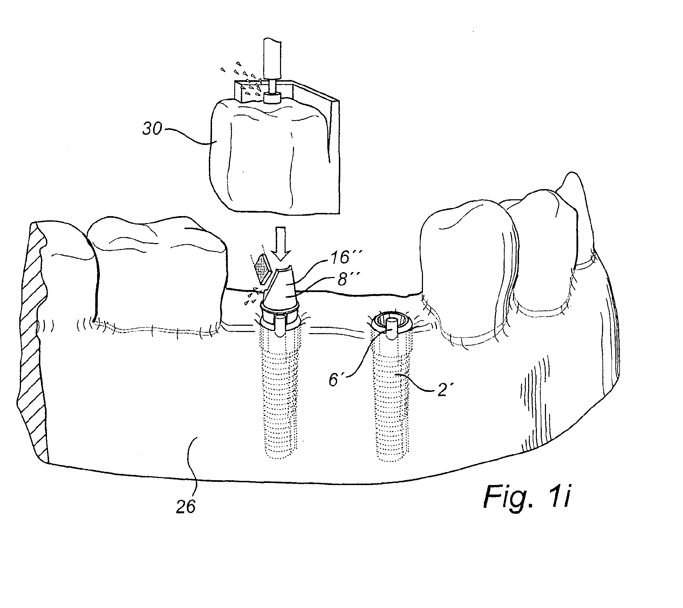

Likewise as illustrated in Fig. 1i, a prosthetic crown 30 may be formed in a desired shape and be engaged in a specific orientation with respect to said indexing means, e.g. by having a rotational lock on the abutment, thereby making sure that the same orientation will be obtained when provided in the oral cavity.

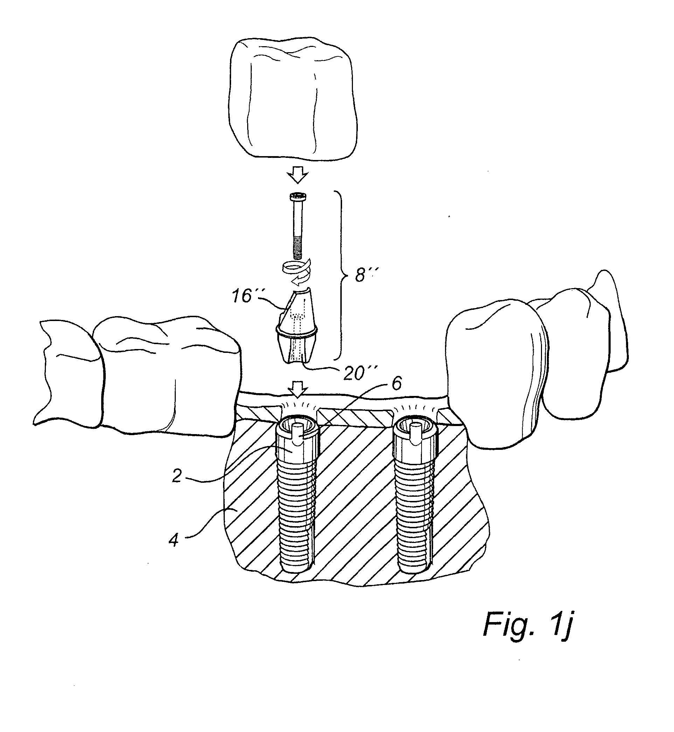

Finally, when the abutment 8" and the prosthetic tooth 30 have been designed and shaped, a dentist may connect them to the implanted fixture 2 in the jawbone 4 of the patient. This is schematically illustrated in Fig. 1j. Thus, because the abutment 8" and fixture 2 can only be connected in one rotational position relative to each other, and because the fixture 2' or fixture replica in the model has the same inclination and rotational orientation as the installed fixture 2 in the jawbone 4 of the patient, the dentist is prevented from connecting the prepared abutment 8" in another indexing position than was intended by the dental technician.

It should be noted that for the actual model making illustrated in Figs. 1a-1h may be performed without an abutment. Instead of using an abutment, an impression component may be connected directly to the fixture and be provided with second indexing means. This would result in a model shown in Fig. 1h. Afterwards, an abutment may be provided comprising a second indexing means as shown in Figs. 1i-1j. Although the figures have illustrated a dental fixture-mating arrangement in the form of a dental abutment, in which the first portion is a prosthesis-receiving portion and the second portion is the fixture engagement portion of the abutment, it should be understood that after the model has been made other fixture-mating arrangements than the illustrated abutment could be provided. For instance, a dental healing component or a final dental restoration comprising said second indexing means could represent said fixture-mating arrangement.

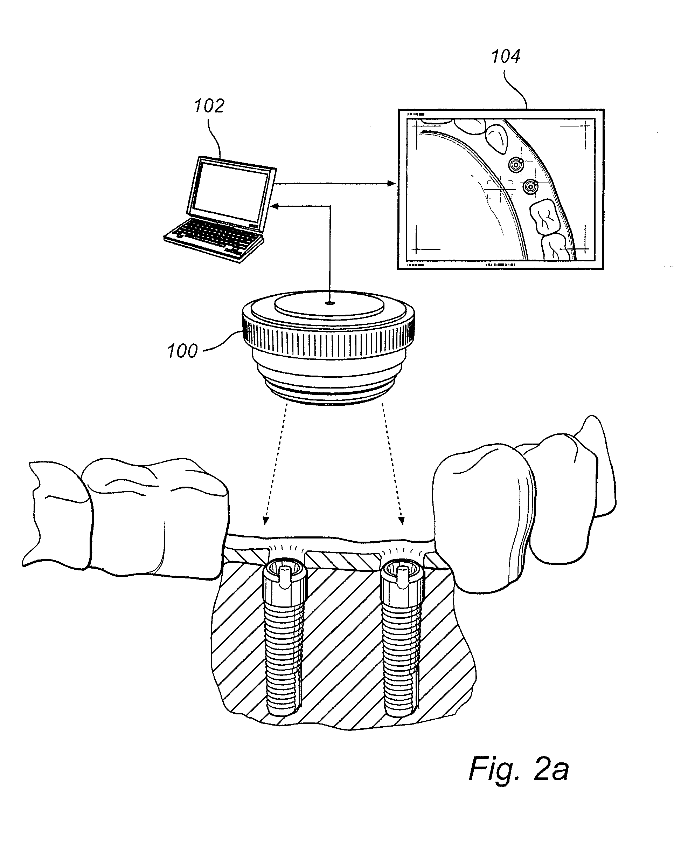

Figs. 2a-2c illustrate at least another example of how to carry out the at least one embodiment of the inventive method.

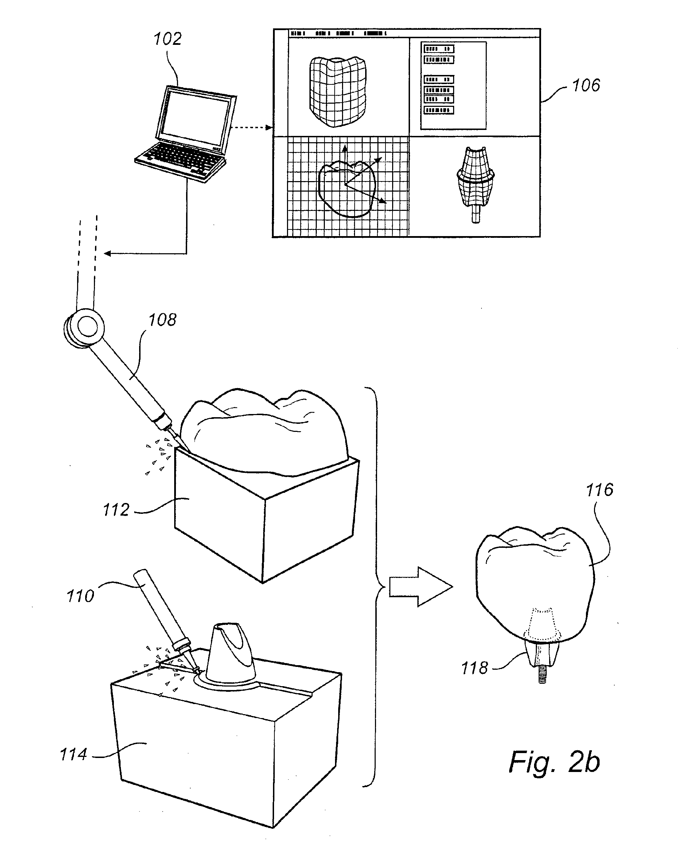

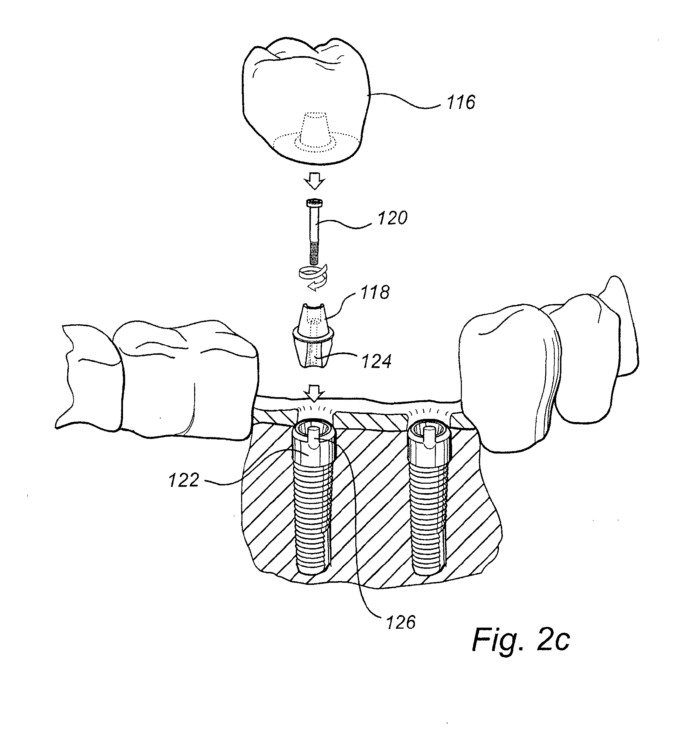

In Fig. 2a, rather than making a physical impression of the implantation site, a digital impression is made by scanning 100 the site, e.g. by means of a 3D camera. The digital impression or optical image can be imported and/or stored to a computer 102 as a three dimensional image 104, from which the inclination of the fixtures and the rotational position of the first indexing means are identifiable. As illustrated in Fig. 2b, by means of computer aided design 106 a desired shape of the abutment and prosthesis is formed, the abutment having second indexing means which only allows the abutment to mate with the fixture in one indexing position. Also the rotational position of the prosthesis relative to the abutment is designed to be locked, e.g. by providing a flat portion on a circumferentially extending surface of the abutment. When the abutment and prosthesis have been designed, control data is provided to manufacturing equipment 108, 110 to form the components. Here, the forming of the respective component is illustrated as a process of cutting away material from a blank 112, 114, resulting in a prosthetic tooth 116 and a body part 118 of an abutment. However, other manufacturing methods are conceivable as well, one example being laser sintering. Finally, as illustrated in Fig. 2c, the formed body part 118 of the abutment is by means of a screw part 120 connected to a fixture 122 in the jawbone. The prosthesis 116 is connected to the abutment. Because the designed patient-specific abutment has an indexing means 124 which can only mate in one rotational position with the corresponding indexing means 126 of the fixture 122, and because the abutment with its indexing means 124 is designed based upon a digital impression which provides a three dimensional image mimicking the fixture 122 in the jawbone, the dentist is prevented from incorrectly positioning the abutment with respect to the fixture 122.

Although Figs. 1a-1j and 2a-2c have shown the acquiring of a physical and digital impression, respectively, for determining the inclination of the fixture and the rotational orientation of first indexing means, an alternative is to determine those before insertion of the fixture. For instance, as explained under the heading "Summary of the Invention", an alternative to acquiring an impression would to determine an inclination of a planned bore hole in the jawbone, which will thus give the inclination of the fixture, and to determine a desired orientation of the first indexing means for the fixture to be inserted into the bore hole.

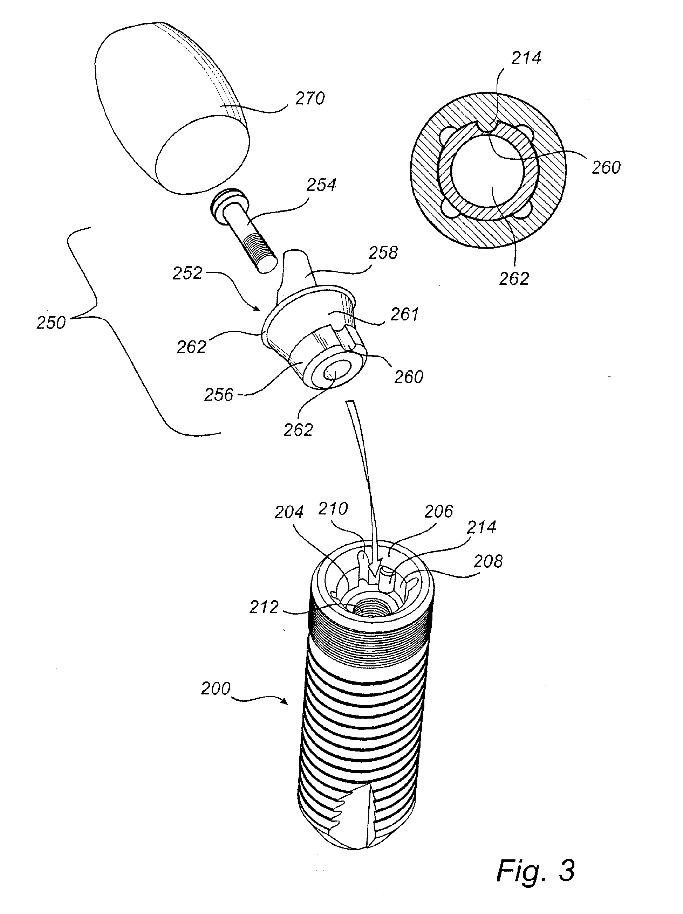

Figs. 3-6 illustrate fixtures and abutments with different examples of conceivable indexing means. However, it should be understood that instead of abutments other fixture-mating arrangements with such indexing means are conceivable, as has already been explained.

Starting, with Fig. 3, a fixture 200 is provided with a socket 204 having an open end. The socket 204 extends apically into the fixture 200. The socket 204 is for receiving a dental component such as an abutment 250. The abutment will bridge the gingiva overlying the bore-hole and support/present a prosthetic part 270. However, the socket 204 may also receive other dental components such as an abutment replica, an abutment blank, an impression element, a driver, a healing component and a final dental restoration.

Although various alternative configurations are conceivable, the socket 204 is herein illustrated as having a conical coronal section 206 and a substantially cylindrical intermediate wall section 208. Four radially extending driver recesses 210 are provided in the intermediate wall section 208 and may as illustrated in the figure also extend into the conical coronal section 206. As an alternative, the intermediate wall section 208 may be substantially conical.

The socket 204 is further provided with an internally threaded apical section 212.

Additionally, the socket 204 is provided with a first indexing means shaped as a protrusion 214. The protrusion 214 projects radially from the socket wall towards the socket centre. The protrusion 214 is herein located between two driver recesses 210. Thus, the protrusion 214 and the driver recesses 210 are provided on the same level along the longitudinal axis of the fixture 200. However, other alternatives are conceivable as well. For instance, the protrusion may be located on a different axial level. It can for instance be located apically or coronally of the driver recesses. The protrusion may, as indicated in the figure, be located in a cylindrical intermediate wall section or, as an alternative, be located in a conical wall section (e.g. coronal conical section).

The dental fixture-mating arrangement is herein illustrated as a two-piece abutment 250 consisting of a body part 252 and a screw part 254. The body part 252 comprises a fixture engagement portion 256, which is herein illustrated as having a generally cylindrical enveloping or circumferentially extending surface, although other enveloping surfaces, such as tapering, would be a conceivable alternatives. The enveloping or circumferentially extending surface thus forms an outer perimeter of the fixture engagement portion 256. The body part 252 further comprises a dental crown-receiving or prosthesis-receiving portion 258 which extends coronally of the fixture 200 above the gingiva to receive a prosthetic tooth 270. An extension portion 261, herein illustrated as coronally flaring up to a shoulder 262, is intended to extend through the gingiva and is provided between the engagement portion 256 and the prosthesis-receiving portion 258.

A second indexing means in the form of a single indexing recess 260 is provided in the cylindrical enveloping surface of the engagement portion 258. The indexing recess 260 is herein illustrated as straight semi-cylindrical, although other shapes of the indexing recess are conceivable as long as the indexing recess 260 can properly mate with the indexing protrusion 214 of the fixture 200 to define a rotational position of the abutment 250 (illustrated in the cross-sectional view of the assembled state).

Reference is now made to the cross-sectional illustration of the abutment/fixture interface in their assembled state (before insertion of the screw part 254). The body part 252 of the abutment 250 is provided with a through-hole 262, wherein the screw part 254 is adapted to be inserted into the through-hole 262 and engage the internal thread 212 of the fixture 200 in order to secure the body part 252 to the fixture 200. The abutment 250 can only be correctly engaged in a single rotational position relative to the fixture 200, i.e. only in such position in which the indexing recess 260 mates with the indexing protrusion 214 of the fixture 200. Thus, the user is prevented from selecting an orientation of the abutment 250 which would be less appropriate with regard to the specific configuration of the jawbone and the gingiva.

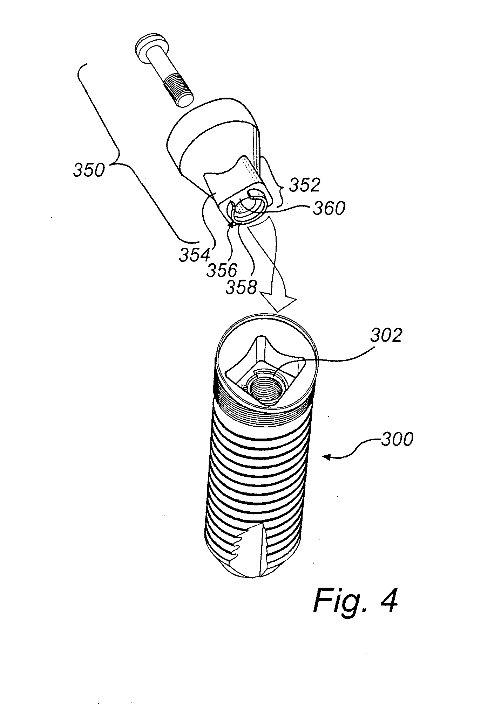

Fig. 4 illustrates another example of a single indexing connection between a fixture 300 and an abutment 350. The engagement portion 352 of the abutment 350 has a first substantially square-shaped positioning portion 354 and a second positioning portion 356 at the apical end of the abutment 350. The second positioning portion 356 is in this embodiment in the shape of a circular collar 358 being provided with a recess 360. The outer diameter of the second positioning portion 356 is somewhat smaller than the outer boundaries of the first positioning portion 354. The reason for this being that the second positioning portion 356 should be able to pass through a coronal portion of the indexing section of the socket in the fixture 300 without interference. The circular collar 358 with its recess 360 thus constitutes a second indexing means which is adapted to fit with a complementary shaped first indexing means 302 in the fixture 300.

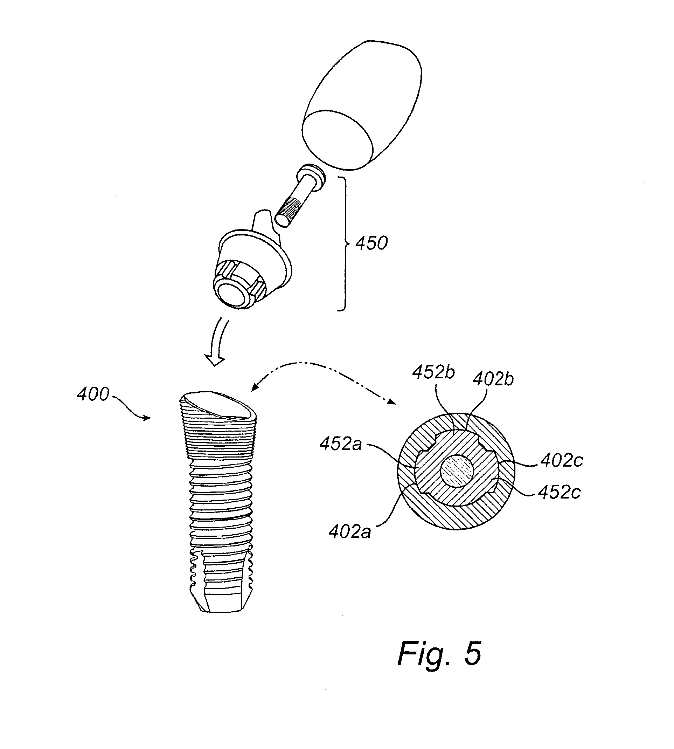

Fig. 5 illustrates another example of a single position connection, which is most clearly visible in the cross-sectional drawing of the implant assembly. The fixture 400 has three radially extending recesses 402a-402c constituting a first indexing means, while the abutment 450 has three radially extending projections 452a-452c constituting a second indexing means. The indexing means are unevenly distributed along the perimeter of the respective component. Taking the first indexing means as an example, there is a first recess 450a, a second recess 450b and a third recess 450c. Following the inner perimeter of the fixture 400, the distance between the first recess 450a and second recess 450b is the same as the distance between the second recess 450b and third recess 450c. However, the distance between the third recess 450c and the first recess 450a is larger. Since the projections 452a-452c of the abutment 450 are equally distributed, the abutment 450 can only be connected in one rotational position relative to the fixture 400.

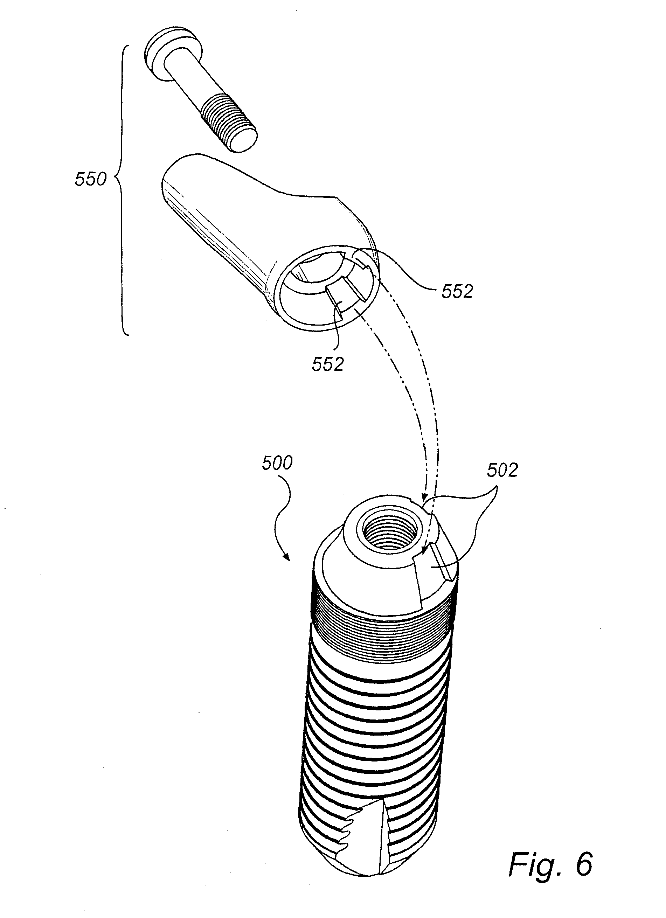

Fig. 6 illustrates yet another example of a single positon connection. In this example, the first indexing means is in the form of two recesses 502 provided on a coronal outer surface of the fixture 500. The recesses 502 are not located opposite each other. The second indexing means is in the form of two inwardly extending protrusions 552 on the inner perimeter of an abutment 550, appropriately located to fit with the recesses 502. As in the previous examples, the abutment 550 can only be connected in one rotational position relative to the fixture 500.

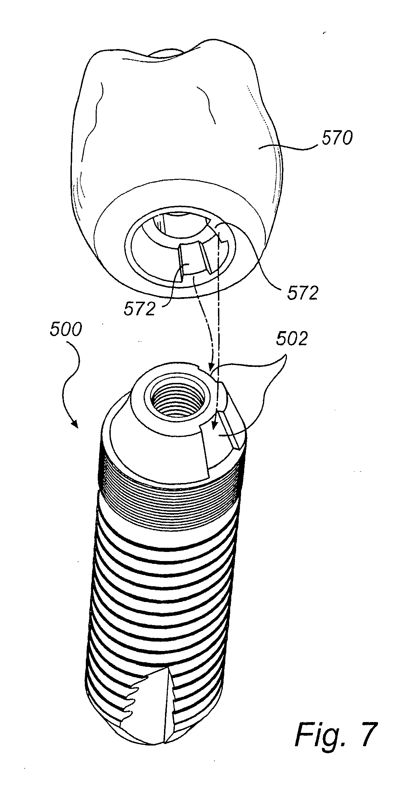

Fig. 7 illustrates in accordance with at least one example embodiment of the invention a final dental restoration 570 connectable to a dental fixture 500. The dental fixture 500 in Fig. 7 is the same as the dental fixture in Fig. 6, thus having first indexing means in the form of two recesses 502. The final restoration 570, here illustrated as a prosthetic crown, is provided with a second indexing means in the form of two inwardly extending protrusions 572 on the inner perimeter of the final restoration, appropriately located to fit with the recesses 502. The final dental restoration 570 can thus only be connected in one rotational position relative to the fixture 500. Although, the final dental restoration 570 has been simply illustrated as a prosthetic crown, it could in alternative embodiments comprise a coping onto which a bulk-material forming the crown has been built up or fused. Additionally, such bulk material may be provided directly (or indirectly via a coping) to an abutment or an abutment-like component, which would thus also be comprised in the final dental restoration. Furthermore, it should be understood, that similarly to the various indexing solutions presented above for connecting an abutment to a fixture, the indexing means can be devised in a variety of different ways, including indexing means having one or more protrusions/recesses or other mating shapes. The final dental restoration may, for instance, be screw retained or cement retained.

## Claims

1. A method of providing a patient-specific dental fixture-mating arrangement, the method comprising:
- determining, for an implantation site at the maxilla or mandible in which a dental fixture (2, 122, 200, 300, 400, 500) having first indexing means (6, 126, 214, 302, 402a, 402b, 402c, 502) has been or will be inserted, an inclination of the fixture relative to the jawbone and the rotational orientation of said first indexing means relative to the jawbone,
- determining, based on the determined inclination of the fixture and rotational orientation of said first indexing means, a shape of a first portion (16", 258) of a dental fixture-mating arrangement (8", 118, 250, 350, 450, 550, 570) and the rotational orientation of said first portion relative to the fixture,
- providing a dental fixture-mating arrangement which comprises
a fixture engaging second portion (14, 256, 352) having second indexing means (20", 124, 260, 358, 360, 452a, 452b, 452c, 552, 572) which can only mate with said first indexing means in one rotational position of the second portion relative to the fixture, and
a first portion having said determined shape and being in such a rotational position relative to said second indexing means so that said determined rotational orientation of the first portion is obtained when the fixture engaging second portion of the dental fixture-mating arrangement is connected to the dental fixture.

2. The method as claimed in claim 1, comprising
- providing a model (26, 2') of the implantation site with adjacent teeth in the jaw based on said determined inclination of the fixture and rotational orientation of said first indexing means, the model comprising a fixture replica having the corresponding inclination and orientation of first indexing means relative to the model as the fixture has or will have relative to the jawbone.

3. The method as claimed in claim 2, wherein said steps of determining the shape and rotational orientation of a first portion and said step of providing the first portion with the determined shape and rotational orientation are performed with a dental fixture-mating arrangement or a blank for a dental fixture-mating arrangement having said second indexing means and being connected to the fixture replica.

4. The method as claimed in claim 2, comprising
- scanning said formed model, and
- transforming the scanned model into a three dimensional digital image, wherein said step of determining a shape and rotational orientation of a first portion is performed based on the three dimensional image.

5. The method as claimed in claim 1 or 2, wherein the step of determining the inclination of the fixture and rotational orientation of said first indexing means is based on a digital impression obtained by intra-oral scanning (100).

6. The method as claimed in claim 1, wherein the step of determining the inclination of the fixture and rotational orientation of said first indexing means is based on a digital impression obtained by intra-oral scanning (100), wherein said step of determining the shape and rotational orientation of a first portion is performed on a computer (102) as a three-dimensional CAD model (106).

7. The method as claimed in claim 6, wherein said steps of providing a dental fixture-mating arrangement and providing the first portion with said determined shape, comprise
- inputting data of the CAD model into a CAM software, and
- controlling an fixture-mating arrangement forming process (108, 110) with said CAM software, wherein the fixture-mating arrangement forming process is selected from the group consisting of:
a) additive manufacturing, such as fused deposition or laser sintering, and
b) subtractive manufacturing, such as machining or milling a blank.

8. The method as claimed in any one of claims 1-7, wherein said second indexing means is provided as an irregular shape of the fixture engaging second portion, or, as one or more recesses or protrusions at the fixture engaging second portion of the dental fixture-mating arrangement, so that said second indexing means can only mate in a single rotational orientation with said first indexing means which is provided as a matching irregular shape or as one or more matching receiving protrusions or recesses, respectively.

9. The method as claimed in any one of claims 1-8, wherein said dental fixture-mating arrangement is a dental abutment (8", 250, 350, 450, 550), wherein said first portion is a prosthesis-receiving portion (16", 258) of the dental abutment and wherein said second portion is a fixture engagement portion (14, 256, 352) of the dental abutment.

10. The method of as claimed in any one of claims 1-8, wherein said dental fixture-mating arrangement comprises a dental abutment (8", 118) and a prosthesis (30, 116), wherein said first portion is the prosthesis and wherein said second portion is a fixture engagement portion of the dental abutment, the method comprising providing the prosthesis with said determined shape and in such a rotational orientation relative to said second indexing means so that, if the prosthesis is connected to a prosthesis-receiving portion of the abutment, said determined rotational orientation of the prosthesis is obtained when the fixture engagement portion of the dental abutment is connected to the dental fixture.

11. The method as claimed in any one of claims 1-8, wherein said dental fixture-mating arrangement is a final dental restoration (570) which comprises said first and second portions.

12. The method as claimed in any one of claims 1-8, wherein said dental fixture-mating arrangement is a dental healing component for supporting the gingiva, wherein said first portion is a gingiva-supporting portion of the dental healing component and wherein said second portion is a fixture engagement portion of the dental healing component.

## Patentansprüche

1. Verfahren zum Bereitstellen einer patientenspezifischen Zahnbefestigungs-Anpassungsanordnung, wobei das Verfahren folgende Schritte umfasst:
- für eine Implantationsstelle am Oberkiefer oder Unterkiefer, an der eine Zahnbefestigung (2, 122, 200, 300, 400, 500), die erste Indexierungsmittel (6, 126, 214, 302, 402a, 402b, 402c, 502) aufweist, eingesetzt wurde oder wird, Bestimmen einer Neigung der Befestigung mit Bezug auf den Kieferknochen und der Drehorientierung der ersten Indexierungsmittel mit Bezug auf den Kieferknochen,
- basierend auf der bestimmten Neigung der Befestigung und der Drehorientierung der ersten Indexierungsmittel, Bestimmen einer Form eines ersten Teils (16", 258) einer Zahnbefestigungs-Anpassungsanordnung (8", 118, 250, 350, 450, 550, 570) und der Drehorientierung des ersten Teils mit Bezug auf die Befestigung,
- Bereitstellen einer Zahnbefestigungs-Anpassungsanordnung, die Folgendes umfasst:
- einen zweiten Befestigungseingriffsteil (14, 256, 352), der zweite Indexierungsmittel (20", 124, 260, 358, 360, 452a, 452b, 452c, 552, 572) aufweist, die in einer Drehposition des zweiten Teils mit Bezug auf die Befestigung nur zu den ersten Indexierungsmitteln passen können, und
- einen ersten Teil, der die bestimmte Form aufweist und sich in einer derartigen Drehposition mit Bezug auf die zweiten Indexierungsmittel befindet, dass die bestimmte Drehorientierung des ersten Teils erzielt wird, wenn der zweite Befestigungseingriffsteil der Zahnbefestigungs-Anpassungsanordnung mit der Zahnbefestigung verbunden wird.

2. Verfahren nach Anspruch 1, umfassend folgenden Schritt:
- Bereitstellen eines Modells (26, 2') der Implantationsstelle mit angrenzenden Zähnen in dem Kiefer, basierend auf der bestimmten Neigung der Befestigung und der Drehorientierung der ersten Indexierungsmittel, wobei das Modell eine Befestigungskopie umfasst, die eine entsprechende Neigung und Orientierung der ersten Indexierungsmittel mit Bezug auf das Modell aufweist wie sie die Befestigung mit Bezug auf den Kiefer aufweist oder aufweisen wird.

3. Verfahren nach Anspruch 2, wobei die Schritte des Bestimmens der Form und der Drehorientierung eines ersten Teils und der Schritt des Bereitstellens des ersten Teils mit der bestimmten Form und Drehorientierung mit einer Zahnbefestigungs-Anpassungsanordnung oder einem Rohteil für eine Zahnbefestigungs-Anpassungsanordnung, welche die zweiten Indexierungsmittel aufweist und mit der Befestigungskopie verbunden ist, ausgeführt werden.

4. Verfahren nach Anspruch 2, umfassend folgende Schritte:
- Scannen des gebildeten Modells und
- Umwandeln des gescannten Modells in ein dreidimensionales digitales Bild, wobei der Schritt des Bestimmens einer Form und Drehorientierung eines ersten Teils basierend auf dem dreidimensionalen Bild ausgeführt wird.

5. Verfahren nach Anspruch 1 oder 2, wobei der Schritt des Bestimmens der Neigung der Befestigung und der Drehorientierung der ersten Indexierungsmittel auf einem digitalen Abdruck basiert, der durch intraorales Scannen (100) erzielt wird.

6. Verfahren nach Anspruch 1, wobei der Schritt des Bestimmens der Neigung der Befestigung und der Drehorientierung der ersten Indexierungsmittel auf einem digitalen Abdruck basiert, der durch intraorales Scannen (100) erzielt wird, wobei der Schritt des Bestimmens der Form und Drehorientierung eines ersten Teils an einem Computer (102) als dreidimensionales CAD-Modell (106) ausgeführt wird.

7. Verfahren nach Anspruch 6, wobei die Schritte des Bereitstellens einer Zahnbefestigungs-Anpassungsanordnung und des Bereitstellens des ersten Teils mit der bestimmten Form folgende Schritte umfassen:
- Eingeben von Daten des CAD-Modells in eine CAM-Software, und
- Steuern eines Prozesses (108, 110) zum Bilden einer Befestigungs-Anpassungsanordnung mit der CAM-Software, wobei der Prozess zum Bilden einer Befestigungs-Anpassungsanordnung aus der Gruppe ausgewählt wird, die Folgendes umfasst:
a) additive Fertigung, wie etwa Fused Deposition oder Lasersintern, und
b) subtraktive Fertigung, wie etwa Bearbeitung oder Fräsen eines Rohteils.

8. Verfahren nach einem der Ansprüche 1 bis 7, wobei die zweiten Indexierungsmittel als unregelmäßige Form des zweiten Befestigungseingriffsteils oder als eine(r) oder mehrere Vertiefungen oder Vorsprünge an dem zweiten Befestigungseingriffsteil der Zahnbefestigungs-Anpassungsanordnung bereitgestellt werden, so dass die zweiten Indexierungsmittel nur in einer einzigen Drehorientierung zu den ersten Indexierungsmitteln passen können, die als passende unregelmäßige Form oder jeweils als ein(e) oder mehrere passende Aufnahmevorsprünge oder Vertiefungen bereitgestellt werden.

9. Verfahren nach einem der Ansprüche 1 bis 8, wobei die Zahnbefestigungs-Anpassungsanordnung ein Zahn-Abutment (8", 250, 350, 450, 550) ist, wobei der erste Teil ein Prothesenaufnahmeteil (16", 258) des Zahn-Abutments ist, und wobei der zweite Teil ein Befestigungseingriffsteil (14, 256, 352) des Zahn-Abutments ist.

10. Verfahren nach einem der Ansprüche 1 bis 8, wobei die Zahnbefestigungs-Anpassungsanordnung ein Zahn-Abutment (8", 118) und eine Prothese (30, 116) umfasst, wobei der erste Teil die Prothese ist, und wobei der zweite Teil ein Befestigungseingriffsteil des Zahn-Abutments ist, wobei das Verfahren das Bereitstellen der Prothese umfasst mit der bestimmten Form und in einer derartigen Drehorientierung mit Bezug auf die zweiten Indexierungsmittel, dass falls die Prothese mit einem Prothesenaufnahmeteil des Zahn-Abutments verbunden ist, die bestimmte Drehorientierung der Prothese erzielt wird, wenn der Befestigungseingriffsteil des Zahn-Abutments mit der Zahnbefestigung verbunden ist.

11. Verfahren nach einem der Ansprüche 1 bis 8, wobei die Zahnbefestigungs-Anpassungsanordnung ein endgültiger Zahnersatz (570) ist, der die ersten und zweiten Teile umfasst.

12. Verfahren nach einem der Ansprüche 1 bis 8, wobei die Zahnbefestigungs-Anpassungsanordnung eine Zahnheilkomponente zur Unterstützung des Zahnfleischs ist, wobei der erste Teil ein Zahnfleischunterstützungsteil der Zahnheilkomponente ist, und wobei der zweite Teil ein Befestigungseingriffsteil der Zahnheilkomponente ist.

## Revendications

1. Procédé de réalisation d'un dispositif d'accouplement de fixation dentaire spécifique à un patient, le procédé comprenant :
- la détermination, pour un site d'implantation au niveau de la mâchoire ou de la mandibule dans lequel une fixation dentaire (2,122, 200, 300, 400, 500) ayant un premier moyen d'indexation (6,126, 214, 302, 402a, 402b, 402c, 502) a été ou sera insérée, d'une inclinaison de la fixation par rapport à la mâchoire et de l'orientation rotative dudit premier moyen d'indexation par rapport à la mâchoire,
- la détermination, sur la base de l'inclinaison déterminée du système et de l'orientation rotative dudit premier moyen d'indexation, d'une forme d'une première partie (16", 258) d'un dispositif d'accouplement de fixation dentaire (8", 118, 250, 350, 450, 550, 570) et d'une orientation rotative de ladite première partie par rapport à la fixation,
- la réalisation d'un dispositif d'accouplement de fixation dentaire qui comprend
une seconde partie d'engagement dans le système (14, 256, 352) ayant un second moyen d'indexation (20", 124, 260, 358, 360, 452a, 452b, 452c, 552, 572) qui peut uniquement s'accoupler avec ledit premier moyen d'indexation dans une position rotative de la seconde partie par rapport à la fixation, et
une première partie ayant ladite forme déterminée et étant dans une telle position rotative par rapport audit second moyen d'indexation de manière à ce que ladite orientation rotative déterminée de la première partie est obtenue lorsque la seconde partie d'engagement dans le dispositif d'accouplement de fixation dentaire est reliée à la fixation dentaire.

2. Procédé selon la revendication 1, comprenant
- la réalisation d'un modèle (26, 2') du site d'implantation avec des dents adjacentes dans la mâchoire selon ladite inclinaison déterminée de la fixation et l'orientation rotative dudit premier moyen d'indexation, le modèle comprenant une réplique de la fixation ayant l'inclinaison et l'orientation correspondantes du premier moyen d'indexation par rapport au modèle que la fixation a ou aura par rapport à la mâchoire.

3. Procédé selon la revendication 2, dans lequel lesdites étapes de détermination de la forme et de l'orientation rotative d'une première partie et ladite étape de réalisation de la première partie avec la forme et l'orientation rotative déterminées sont réalisées avec un dispositif d'accouplement de fixation dentaire ou une ébauche pouvant accueillir un dispositif d'accouplement de fixation dentaire ayant ledit second moyen d'indexation et étant relié à la réplique de la fixation.

4. Procédé selon la revendication 2, comprenant
- le scannage dudit modèle formé, et
- la transformation du modèle scanné en une image numérique à trois dimensions, dans lequel ladite étape de détermination d'une forme et d'une orientation rotative d'une première partie est exécutée sur la base de l'image à trois dimensions.

5. Procédé selon la revendication 1 ou 2, dans lequel l'étape de détermination de l'inclinaison de la fixation et de l'orientation rotative dudit premier moyen d'indexation est basée sur une impression numérique obtenue par scannage intra-oral (100).

6. Procédé selon la revendication 1, dans lequel l'étape de détermination de l'inclinaison de la fixation et de l'orientation rotative dudit premier moyen d'indexation est basée sur une impression numérique obtenue par scannage intra-oral (100), dans lequel ladite étape de détermination de la forme et de l'orientation rotative de la première partie est exécutée sur un ordinateur (102) comme un modèle de CAO 3D (106).

7. Procédé selon la revendication 6, dans lequel les dites étapes de réalisation d'un dispositif d'accouplement de fixation dentaire et de réalisation de la première partie avec ladite forme déterminée comprend
- la saisie des données du modèle CAO dans un logiciel de FAO, et
- le contrôle du processus de formation d'un dispositif d'accouplement de fixation (108,110) avec ledit logiciel de FAO, dans lequel le processus de formation du dispositif d'accouplement de fixation est sélectionné dans le groupe constitué de :
a) la fabrication additive, tels que l'impression 3D ou le frittage laser, et
b) la fabrication soustractive, tel que l'usinage ou le fraisage d'une ébauche.

8. Procédé selon l'une quelconque des revendications 1-7, dans lequel ledit second moyen d'indexation est réalisé sous une forme irrégulière de la seconde partie d'engagement dans la fixation, ou, sous forme d'un ou plusieurs évidements ou saillies sur la seconde partie d'engagement dans le système du dispositif d'accouplement de fixation dentaire, de manière à ce que ledit second moyen d'indexation puisse s'accoupler uniquement dans une orientation rotative unique avec ledit premier moyen d'indexation qui est fourni sous une forme irrégulière de correspondance, ou respectivement sous forme d'un ou plusieurs évidements ou saillies récepteurs correspondants.

9. Procédé selon l'une quelconque des revendications 1-8, dans lequel ledit dispositif d'accouplement de fixation dentaire est un pilier dentaire (8", 250, 350, 450, 550), dans lequel ladite première partie est une partie réceptrice de prothèse (16", 258) du pilier dentaire et dans lequel ladite seconde partie est une partie d'engagement dans la fixation (14, 256, 352) du pilier dentaire.

10. Procédé selon l'une quelconque des revendications 1-8, dans lequel ledit dispositif d'accouplement de fixation dentaire comprend un pilier dentaire (8", 118) et une prothèse (30, 116), dans lequel ladite première partie est la fixation et dans lequel ladite seconde partie est une partie d'engagement dans la fixation du pilier dentaire, le procédé comprenant la réalisation de la prothèse avec ladite forme déterminée et selon une orientation rotative par rapport audit second moyen d'indexation de manière à ce que, si la prothèse est reliée à une partie réceptrice de prothèse du pilier, ladite orientation rotative déterminée de la prothèse est obtenue lorsque la partie d'engagement dans la fixation du pilier dentaire est reliée à la fixation dentaire.

11. Procédé selon l'une quelconque des revendications 1-8, dans lequel ledit dispositif d'accouplement de fixation dentaire est une restauration dentaire finale (570) qui comprend les dites première et seconde parties.

12. Procédé selon l'une quelconque des revendications 1-8, dans lequel le dispositif d'accouplement de fixation dentaire est une composante de guérison dentaire pour supporter la gencive, dans lequel ladite première partie est une partie de la composante de guérison dentaire soutenant la gencive et dans lequel ladite seconde partie est une partie d'engagement dans la fixation de la composante de guérison dentaire.
